# EUROPEAN PATENT APPLICATION

(11) **EP 4 827 149 A1**
(43) Date of publication of application: **21.10.2026**
(21) Application number: 24910809.3
(22) Date of filing: 16.12.2024
(51) Int. Cl.: H04W 24/02

(54) **BURST ARRIVAL TIME DETERMINING METHOD AND RELATED APPARATUS**

(30) Priority: 28.12.2023 CN 202311854073
(71) Applicant: Huawei Technologies Co., Ltd., Shenzhen, Guangdong 518129 (CN)
(72) Inventor: SUN, Haiyang, Shenzhen, Guangdong 518129 (CN); SCHRAMM, Mirko, Shenzhen, Guangdong 518129 (CN)
(74) Representative: Maiwald GmbH
(86) International application number: PCT/CN2024/139586
(87) International publication number: WO 2025/139878

(57) **Abstract**

This application provides a burst arrival time determining method and a related apparatus. In the burst arrival time determining method provided in this application, an access network device obtains a locally configured dynamic CN PDB, and corrects, based on the dynamic CN PDB and a mapping relationship between TSCAC BAT and TSCAI BAT, TSCAI BAT sent by an SMF network element, thereby ensuring accuracy of an end-to-end deterministic latency.

## Description

This application claims priority to Chinese Patent Application No. 202311854073.2, filed with the China National Intellectual Property Administration on December 28, 2023 and entitled "BURST ARRIVAL TIME DETERMINING METHOD AND RELATED APPARATUS", which is incorporated herein by reference in its entirety.

### TECHNICAL FIELD

This application relates to the communication field, and in particular, to a burst arrival time determining method and a related apparatus.

### BACKGROUND

A 5th-generation mobile communication system (5th-generation system, 5GS) combines a quality of service (quality of service, QoS) technology to implement end-to-end deterministic transmission. However, burst data in a network cannot be predicted and avoided. When the 5GS communicates with an external time sensitive network (time sensitive networking, TSN), it is difficult to ensure accuracy of an end-to-end deterministic latency. This is not conducive to service orchestration.

### SUMMARY

This application provides a burst arrival time determining method and a related apparatus, to ensure accuracy of a deterministic latency in a time sensitive service and meet a transmission requirement in the industrial field.

According to a first aspect, this application provides a burst arrival time determining method, applied to an access network device, where the method includes:
receiving first information from a core network element, where the first information includes first burst arrival time BAT; and determining second BAT based on a dynamic core network packet delay budget CN PDB and the first BAT, where the second BAT is BAT of time sensitive communication assistance information TSCAI, and the access network device supports the dynamic CN PDB.

In this application, a dynamic value for the CN PDB (dynamic value for the CN PDB) is referred to as the dynamic CN PDB.

Based on a mapping relationship between TSCAC BAT and TSCAI BAT, the access network device may correct, based on the dynamic CN PDB, the first BAT sent by the core network element to the second BAT, thereby ensuring accuracy of an end-to-end deterministic latency.

In some implementations, the first BAT is BAT of a time sensitive communication assistance container TSCAC.

In some implementations, the method further includes:
receiving second information from the core network element, where the second information indicates that the core network element does not map BAT.

The access network device may determine, based on the second information, that the first BAT is TSCAC BAT or TSCAI BAT, to subsequently correct the first BAT.

In some implementations, before receiving the first information from the core network element, the method further includes:
sending third information to the core network element, where the third information indicates that the access network device supports the dynamic CN PDB.

The core network element may determine, based on the third information, whether the access network device supports the dynamic CN PDB, to determine whether to map the TSCAC BAT included in the TSCAC.

In some implementations, the first BAT is TSCAI BAT; and
determining the second BAT based on the dynamic core network packet delay budget CN PDB and the first BAT includes:
determining the second BAT based on the dynamic CN PDB, the first BAT, and a static CN PDB.

In this application, a static value for the CN PDB (static value for the CN PDB) is referred to as the static CN PDB.

In some implementations, the method further includes:
receiving second information from the core network element, where the second information indicates that the core network element has mapped BAT.

According to a second aspect, this application provides a burst arrival time determining method, applied to a core network element, where the method includes:
receiving third information from an access network device, where the third information indicates whether the access network device supports a dynamic CN PDB; and sending first information to the access network device based on the third information, where the first information indicates first BAT.

In some implementations, the third information indicates that the access network device supports the dynamic CN PDB, and the first BAT is TSCAC BAT.

In some implementations, the method further includes:
sending second information to the access network device, where the second information indicates that the core network element does not map BAT.

In some implementations, second BAT is TSCAI BAT.

In some implementations, the method further includes:
sending second information to the access network device, where the second information indicates that the core network element has mapped BAT.

According to a third aspect, this application provides a burst arrival time determining method, applied to an access network device, where the method includes:
sending a dynamic CN PDB to a core network element.

According to a fourth aspect, this application provides a burst arrival time determining method, applied to a core network element, where the method includes:
receiving a dynamic CN PDB from an access network device; determining second BAT based on the dynamic CN PDB and first BAT, where the first BAT is TSCAC BAT, and the second BAT is TSCAI BAT; and sending fourth information to the access network device, where the fourth information includes the second BAT.

According to a fifth aspect, this application provides a burst arrival time determining apparatus, where the burst arrival time determining apparatus includes functional modules configured to implement any burst arrival time determining method mentioned in the foregoing implementations. Optionally, each module may be implemented by software and/or hardware.

According to a sixth aspect, this application provides a burst arrival time determining apparatus, including a processor. The processor is coupled to a memory, and may be configured to execute instructions in the memory, to implement any burst arrival time determining method mentioned in the foregoing implementations. Optionally, the apparatus further includes the memory. Optionally, the apparatus further includes a communication interface, and the processor is coupled to the communication interface.

According to a seventh aspect, this application provides a computer-readable medium. The computer-readable medium stores program code to be executed by a device, and the program code includes any burst arrival time determining method mentioned in the foregoing implementations.

According to an eighth aspect, this application provides a computer program product, including a computer program. When the computer program is executed by a processor, any burst arrival time determining method mentioned in the foregoing implementations is implemented.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1A and FIG. 1B are reference diagrams of a non-roaming 5G system architecture;
FIG. 2 is a diagram of an architecture of a 5G QoS model;
FIG. 3 is a diagram of a system architecture for interworking between a 5GS in a 3GPP network and a TSN system;
FIG. 4 is a diagram of deterministic latency transmission through cache forwarding during downlink communication between a 5GS and a TSN network;
FIG. 5A and FIG. 5B are diagrams of a TSC flow arriving at a TSC translator in a downlink direction and an uplink direction;
FIG. 6 is a diagram of a system architecture for interworking between a 5GS in a 3GPP network and a TSC service;
FIG. 7 is a schematic flowchart of a burst arrival time determining method according to an embodiment of this application;
FIG. 8 is a schematic flowchart of a burst arrival time determining method according to another embodiment of this application;
FIG. 9 is a schematic flowchart of a burst arrival time determining method according to an embodiment of this application;
FIG. 10 is a schematic flowchart of a burst arrival time determining method according to an embodiment of this application;
FIG. 11 is a schematic flowchart of a burst arrival time determining method according to an embodiment of this application;
FIG. 12 is a diagram of a structure of a burst arrival time determining apparatus according to an embodiment of this application;
FIG. 13 is a diagram of a structure of a burst arrival time determining apparatus according to another embodiment of this application; and
FIG. 14 is a diagram of a structure of a burst arrival time determining apparatus according to still another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

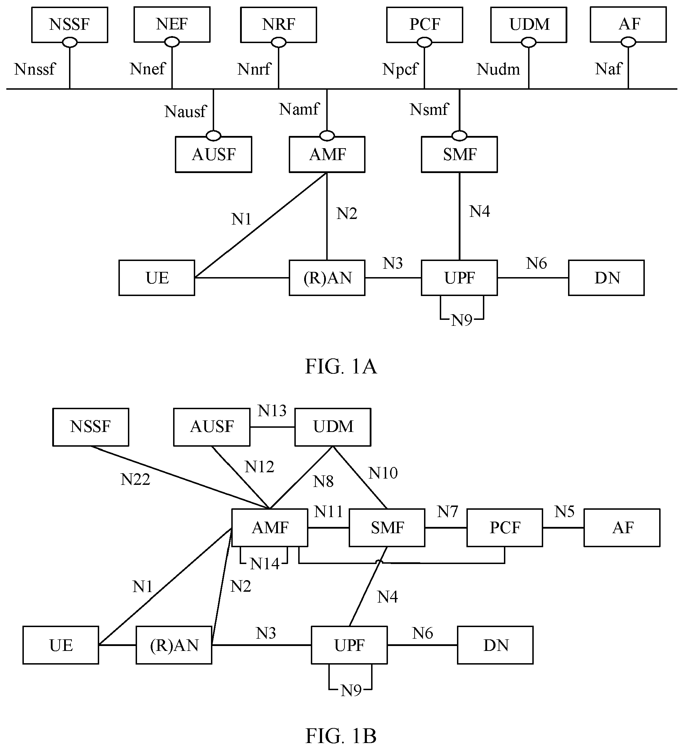

FIG. 1A and FIG. 1B are reference diagrams of a non-roaming 5G system architecture. FIG. 1(A) is a representation form based on a service interface (service-based), and FIG. 1(B) is a representation form based on a reference point (reference point). As shown in FIG. 1A and FIG. 1B, the 5G system architecture is divided into a terminal device part, a data network (data network, DN) part, and an operator network part.

The operator network may include a network slice selection function (network slice selection function, NSSF) network element, a network exposure function (network exposure function, NEF) network element, a network repository function (Network Repository Function, NRF) network element, an application function (application function, AF) network element, an access and mobility management function (access and mobility management function, AMF) network element, a session management function (session management function, SMF) network element, a (radio) access network ((radio) access network, (R)AN), a user plane function (user plane function, UPF) network element, an authentication server function (Authentication Server Function) network element, a policy control function (policy control function, PCF) network element, a unified data management (unified data management, UDM) network element, and the like.

Based on the non-roaming 5G system architecture shown in FIG. 1A and FIG. 1B, functions of network elements related to this application are as follows.

A terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.

An access network device is a device that provides access for a terminal device, and includes a radio access network RAN device and an AN device. The RAN device is mainly a radio network device defined by the 3rd generation partnership project (3rd generation partnership project, 3GPP), and the AN may be an access network device defined by non-3GPP.

The RAN device is mainly responsible for functions such as radio resource management, quality of service (quality of service, QoS) management, and data compression and encryption on an air interface side. The RAN device may include base stations in various forms, for example, a macro base station, a micro base station (which is also referred to as a small cell), a relay station, and an access point. In systems that use different radio access technologies, names of a device that has a base station function may be different. For example, in a 5G system, the device is referred to as a RAN or a gNB (the next generation NodeB, NodeB); in a long term evolution (long term evolution, LTE) system, the device is referred to as an evolved NodeB (evolved NodeB, eNB or eNodeB); and in a 3rd generation (3rd generation, 3G) system, the device is referred to as a NodeB (NodeB).

The AN device allows a terminal device and a 3GPP core network to perform interconnection and interworking by using a non-3GPP technology. For example, the non-3GPP technology includes wireless fidelity (wireless fidelity, Wi-Fi), worldwide interoperability for microwave access (worldwide interoperability for microwave access, WiMAX), and a code division multiple access (code division multiple access, CDMA) network, or the like. For ease of description, the following uses an example in which the RAN is used as the access network device for description.

The AMF network element is mainly responsible for mobility management in a mobile network, such as user location update, registration of a user with a network, and user switching.

The SMF network element is mainly responsible for session management in a mobile network, for example, session establishment, modification, and release. For example, specific functions are allocation of an IP address for a user and selection of a UPF network element that provides a packet forwarding function.

The UPF network element is responsible for forwarding and receiving user data in the terminal device. The user plane function network element may receive user data from a data network, and transmit the user data to the terminal device through the access network device. The UPF network element may further receive the user data from the terminal device through the access network device, and forward the user data to the data network. Transmission resources and scheduling functions that are used by the UPF network element to provide services for the terminal device are managed and controlled by the SMF network element.

The PCF network element mainly supports providing a unified policy framework to control network behavior, and providing a policy rule to a control layer network function, and is responsible for obtaining policy-related subscription information of a subscriber.

The NEF network element is mainly for capability supporting and event exposure.

The AF network element mainly supports interacting with a 3GPP core network to provide a service, for example, affecting a data routing decision and a policy control function, or providing some third-party services for a network side. If the AF network element and the 5G system are located in different trust domains, an input may be provided through a network exposure function (NEF) application programming interface (application programming interface, API). If the AF network element and the 5G system are located in a same trust domain, an input may be directly provided by using a time sensitive communication time synchronization function (time sensitive communication time synchronization function, TSCTSF) network element. In the 5G system, the application function network element may be an AF network element. In future communication, for example, in a sixth generation (6th generation, 6G) mobile communication system, the application function network element may still be an AF network element or have another name. This is not limited in this application.

The UDM network element is configured to generate an authentication credential, process a subscriber identifier (for example, store and manage a subscription permanent identifier), control access authorization, manage subscription data, and the like.

The DN is a service network that provides a data transmission service for a user, for example, an internet protocol (internet protocol) multi-media service (IP multi-media service, IMS) or internet (Internet).

In FIG. 1A and FIG. 1B, both sequence numbers named in an "N+network element abbreviation" form, for example, Nnssf and Nnef, and sequence numbers named in an "N+number" form, for example, N1 and N2, are interface sequence numbers. For meanings of the interface serial numbers, refer to meanings defined in the 3GPP standard protocol. This is not limited herein.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

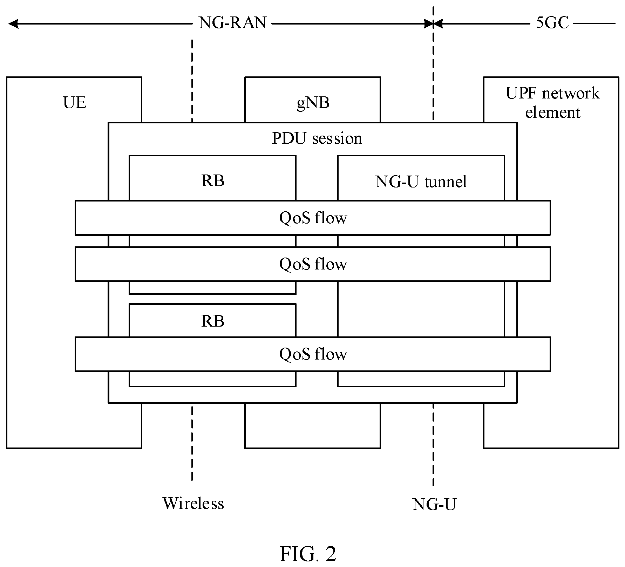

In the 5GS, to ensure end-to-end quality of service of a service, a 5G QoS model based on a quality of service flow (quality of service flow, QoS Flow) is proposed. FIG. 2 is a diagram of an architecture of the 5G QoS model. When UE communicates with a data network (data network, DN) in a 5G network, one or more protocol data unit (protocol data unit, PDU) sessions may be established, and the DN is accessed by using the PDU session. As shown in FIG. 1A and

FIG. 1B, one or more QoS flows may be established in each PDU session. A radio bearer (radio bearer, RB) between the UE and the gNB corresponds to one or more QoS flows, and an interface (next generation-user plane function, NG-U) tunnel between the gNB and the UPF network element corresponds to one or more QoS flows. Each QoS flow may be identified by using a QoS flow identifier (QoS flow identifier, QFI), and the QFI may indicate a unique QoS flow in the PDU session.

In a forwarding process of the conventional Ethernet, when a large quantity of data packets instantaneously arrive at a forwarding port, a high forwarding latency or a packet loss may be caused. Consequently, the conventional Ethernet cannot provide a service with high reliability and a low transmission latency, and cannot meet requirements in fields such as vehicle control and the industrial internet. The institute of electrical and electronics engineers (institute of electrical and electronics engineers, IEEE) defines related standards of a time sensitive network (time sensitive networking, TSN) to meet a requirement of reliable latency transmission. The TSN can ensure the Ethernet to have real-time performance and deterministic performance, ensure reliability of data transmission of a time sensitive service, and predict an end-to-end transmission latency, thereby meeting a strict transmission requirement in the industrial field. To meet the deterministic transmission requirement of the TSN service, a control plane and a user plane of a 5GS core network need to be enhanced to support functions such as interworking with industrial networks, precise clock synchronization, and deterministic transmission and scheduling.

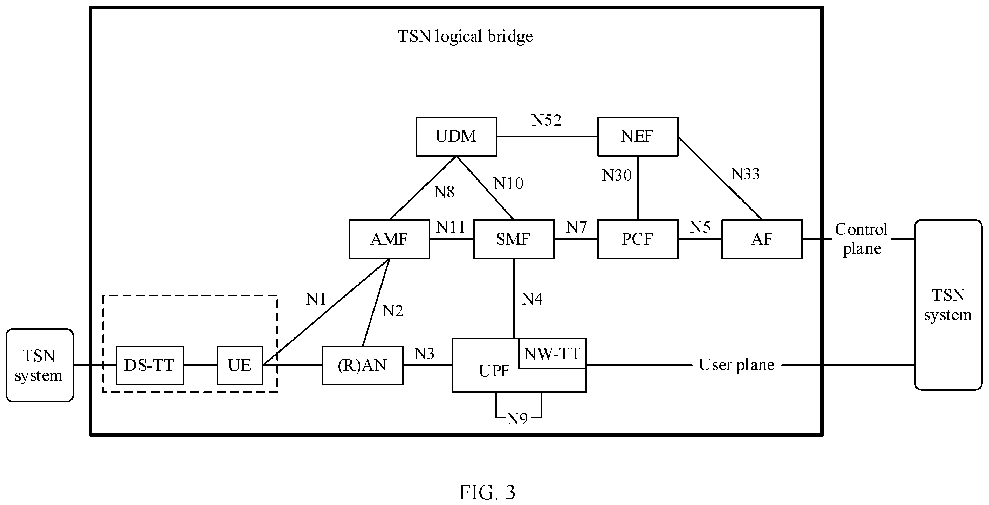

FIG. 3 is a diagram of a system architecture for interworking between a 5GS in a 3GPP network and a TSN system. As shown in FIG. 3, the 5G system and a TSN translator (TSN translator) are entirely used as a logical TSN switching node, that is, a TSN bridge (TSN Bridge). The TSN translator translates and adapts a characteristic and information of a 5G network into information required by the TSN, and provides the information to the TSN system, or translates information required by the TSN system into the characteristic or the information for the 5G network, and provides the characteristic or the information for the 5G system. FIG. 3 shows only some network elements (namely, the AMF network element, the SMF network element, the PCF network element, the RAN, the UE, the AF network element, and the UPF network element) in the 5GS architecture.

On a user plane, a UPF network element side time sensitive communication (time sensitive communication, TSC) translator (network side TSC Translator, NW-TT) is deployed in the UPF network element. A UE device side TSC translator (device side TSC Translator, DS-TT) is deployed inside the UE, or may be deployed outside the UE, and "outside the UE" herein may be a fixed network or a hotspot enabled by the UE.

On a control plane, the 5GS uses the AF network element as a TSN translator on the control plane to exchange information with a node in the TSN system. The exchanged information includes capability information, TSN configuration information (including time scheduling information of a TSN input/output port), and the like of a 5GS switching node.

The AF network element provides the capability information of the 5GS switching node for centralized network configuration (centralized network configuration, CNC) in the TSN system. The CNC determines the TSN configuration information of the 5GS switching node for a TSN service based on the capability information of the 5GS switching node and capability information of another TSN switching node. The AF network element provides, for the 5GS switching node, the TSN configuration information that is determined by the CNC and that is specific to the 5GS switching node.

The capability information of the 5GS switching node includes an internal processing latency of the 5GS switching node, a UE-side transmission latency of the 5GS switching node, and a UPF network element transmission latency of the 5GS switching node. The internal processing latency of the 5GS switching node further includes UE-side residence time (residence time) (namely, processing dwell time of a TSN packet in the UE and a UE-side TSN translator), UPF-side residence time (namely, processing dwell time of the TSN packet in the UPF network element and a UPF network element TSN translator), and a transmission latency between the UE and the UPF network element, which is specifically represented as a packet delay budget (packet delay budget, PDB) value of the TSN packet between the UE and the UPF network element. The PDB is characteristic information of a QoS flow corresponding to the TSN packet, and the PDB defines an upper time limit of a possible latency of the data packet between the UE and an N6 termination point of the UPF network element.

The 5GS is entirely used as a TSN switching node. The CNC configures a transmit time window and a flow periodicity for each TSN switching node based on information reported by the 5GS switching node and another switching node, to ensure an end-to-end deterministic latency.

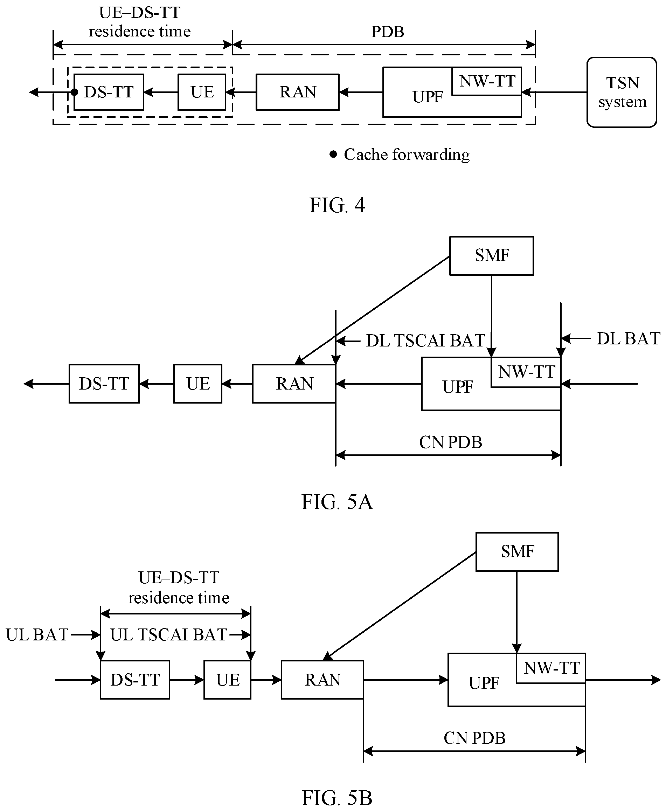

FIG. 4 is a diagram of deterministic latency transmission through cache forwarding during downlink communication between a 5GS and a TSN network. As shown in FIG. 4, in a process of processing a packet on a user plane, after the packet is transmitted from a TSN system to an NW-TT deployed in a UPF network element, the NW-TT sends the packet to a DS-TT. The DS-TT sends the packet within preconfigured time based on a transmit time window (that is, a gating control scheduling parameter) configured by a CNC. For a specific packet with a deterministic latency requirement, the 5GS needs to determine a corresponding PDB based on a packet requirement, to ensure that transmission time of the packet between the UE and the UPF network element is not greater than the PDB. In other words, the packet arrives at the DS-TT earlier, so that the packet can catch up with the transmit time window configured by the CNC.

When the 5GS in the 3GPP network interfaces with the TSN system, a black box model is used. The CNC configures, based on a flow granularity of a TSN data stream, time at which the TSN stream arrives at a 5G core network and time at which the TSN stream leaves the 5G core network. Uncertainty caused by air interface transmission and wired transmission between the UE and the UPF network element is eliminated in a TSC translator at an endpoint through caching.

When the 5GS uses the AF network element as the TSN translator to exchange information with the TSN system, the 5GS may obtain scheduling information of a TSC flow from the CNC. FIG. 5A and FIG. 5B are diagrams of a TSC flow arriving at a TSC translator in a downlink direction and an uplink direction. With reference to the diagram of the system architecture for interworking between the 5GS and the TSN system in FIG. 3, it can be learned that the AF network element may determine, based on the scheduling information of the TSC flow, time at which the TSC flow arrives at an ingress of the 5GS. As shown in FIG. 5(A), in the downlink direction, the time at which the TSC flow arrives at the ingress of the 5GS is time at which the TSC flow arrives at an NW-TT in the UPF network element, and the time is referred to as downlink burst arrival time (downlink burst arrival time, DL BAT). Similarly, as shown in FIG. 5(B), in the uplink direction, the time at which the TSC flow arrives at the ingress of the 5GS is time at which the TSC flow arrives at a DS-TT, and the time is referred to as uplink burst arrival time (uplink burst arrival time, UL BAT).

It can be learned from the architectural diagram shown in FIG. 3 that the AF network element provides a TSC assistance container (TSC assistance container, TSCAC) to the SMF network element via the PCF network element. The TSCAC includes the following information: a flow direction, a flow periodicity, and burst arrival time (burst arrival time, BAT). It may be understood that the TSCAC may further include other information.

The flow direction indicates that the TSC flow is in an uplink direction or a downlink direction. The flow periodicity indicates an interval between start time of two burst (burst) TSC flows. The BAT indicates time at which a first data packet of a burst TSC flow arrives at an access port of the 5GS in a given TSC flow direction. As shown in FIG. 5A and FIG. 5B, in the downlink direction, the BAT is DL BAT of the TSC flow arriving at the NW-TT, and in the uplink direction, the BAT is UL BAT of the TSC flow arriving at the DS-TT.

According to the diagram of the architecture of the 5G QoS model shown in FIG. 2, the SMF network element binds a traffic flow to a QoS flow, that is, there is a correspondence between the QoS flow and the traffic flow. When the 5GS interworks with the TSN system, for a time sensitive service, it may be considered that the QoS flow one-to-one corresponds to the TSC flow.

Therefore, the 5GS may determine a PDB in characteristic information based on the QoS flow corresponding to the TSC flow. It should be noted that the PDB includes an access network packet delay budget (access network PDB, AN PDB) and a core network packet delay budget (core network PDB, CN PDB). The CN PDB represents, for one PDB, an upper time limit of a possible latency between any N6 termination point at the UPF network element (for any UPF network element that may be selected for a PDU session) and the RAN. Correspondingly, the AN PDB is determined by the PDB by subtracting a value of the CN PDB.

As shown in FIG. 5(A), the SMF network element may determine the CN PDB based on the QoS flow corresponding to the TSC flow, and may determine, based on the DL BAT and the CN PDB that are included in the TSCAC, time at which the TSC flow arrives at an ingress of the RAN in the downlink direction. The SMF network element may use the time as a part of the TSC assistance information (TSC assistance information, TSCAI), and transparently transmit the TSCAI to the RAN via the AMF network element, so that the RAN node reserves a resource in advance.

As shown in FIG. 5(B), the SMF network element may determine, based on the UE-side residence time (residence time) and the UL BAT included in the TSCAC, time at which the TSC flow arrives at an egress of the UE in the uplink direction. The SMF network element may provide the time for the RAN through the TSCAI, so that the RAN node reserves a resource in advance.

The TSCAI includes the following information: a flow direction, a flow periodicity, and burst arrival time BAT. It may be understood that the TSCAI may further include other information. It should be noted that the TSCAC includes burst arrival time BAT, and the TSCAI also includes the burst arrival time BAT. The burst arrival time in the TSCAC is TSCAC BAT, and the burst arrival time in the TSCAI is TSCAI BAT.

The flow direction indicates that the TSC flow is an uplink direction or a downlink direction. The flow periodicity indicates an interval between start time of two burst (burst) TSC flows. As shown in FIG. 5A and FIG. 5B, in the downlink direction, the TSCAI BAT indicates time at which a first data packet of a burst TSC flow arrives at an ingress of the RAN node, and in the uplink direction, the TSCAI BAT indicates time at which a first data packet of the burst TSC flow arrives at an egress of the UE.

A process in which the SMF network element determines the TSCAI BAT based on the BAT included in the TSCAC may be understood as that the SMF network element maps the BAT in the TSCAC, to obtain the TSCAI BAT.

It may be understood that when the SMF network element determines the TSCAI BAT in the downlink direction based on the DL BAT and the CN PDB that are included in the TSCAC, the TSCAI BAT satisfies the following mapping manner: TSCAI BAT=TSCAC DL BAT+DL CN PDB. The TSCAC DL BAT is burst arrival time BAT included in the TSCAC in the downlink direction, and the DL CN PDB is the CN PDB in the downlink direction.

The SMF network element may also correct, based on a time offset measurement value latest received from the UPF network element, the TSCAC BAT included in the TSCAC, and set the TSCAI BAT in the downlink direction as a sum of a corrected value and the CN PDB.

When the SMF network element determines the TSCAI BAT in the uplink direction based on the UE-side residence time (residence time) and the UL BAT included in the TSCAC, the TSCAI BAT satisfies the following mapping manner: TSCAI BAT=TSCAC UL BAT+UE-DS-TT residence time. The TSCAC UL BAT is burst arrival time BAT included in the TSCAC in the uplink direction, and the UE-DS-TT residence time is the UE-side residence time.

The SMF network element may also correct, based on a time offset measurement value latest received from the UPF network element, the TSCAC BAT included in the TSCAC, and set the TSCAI BAT in the uplink direction as a sum of a corrected value and the UE-DS-TT residence time.

It should be noted that, when the SMF network element maps the TSCAC BAT, regardless of whether the SMF network element corrects the TSCAC BAT based on the time offset measurement value, the CN PDB needs to be used to correct the TSCAC BAT, to determine the TSCAI BAT. Therefore, "mapping" in this embodiment of this application indicates to use the CN PDB to correct the TSCAC BAT.

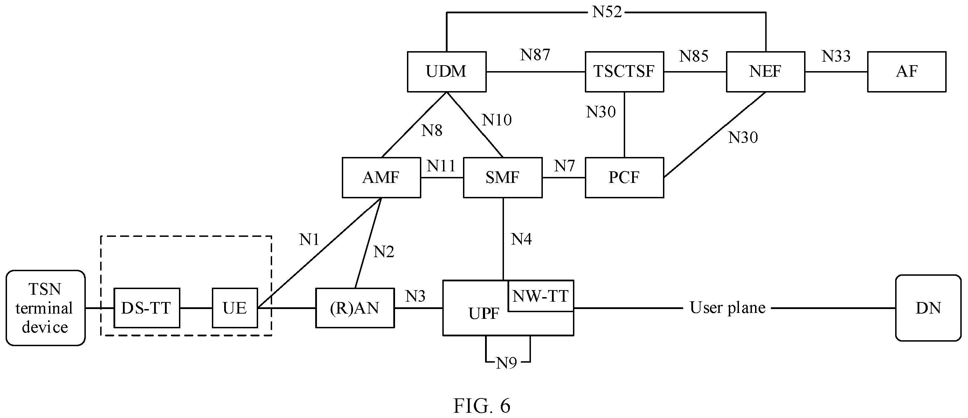

FIG. 3 is the diagram of the system architecture for interworking between the 5GS system in the 3GPP network and the TSN system. It may be understood that when the 3GPP network interworks with an external time sensitive network, the external time sensitive network may not be limited to the TSN network, and the 3GPP network may interwork with a TSC service of non-TSN. FIG. 6 is a diagram of a system architecture for interworking between a 5GS in a 3GPP network and a TSC service. As shown in FIG. 6, when the 5GS interworks with the TSC service of the non-TSN, the 5GS does not need to be entirely used as a logical switching node. Functions of the TSCTSF network element and the AF network element are similar to the functions of the AF network element used as the control plane TSN translator in FIG. 3. The AF network element or the TSCTSF network element sends the TSCAC to the SMF network element. Processing performed by the SMF network element on the TSCAC is the same as the processing shown in FIG. 5A and FIG. 5B. Details are not described herein again.

It should be noted that the CN PDB may be a static value (static value for the CN PDB), or may be a dynamic value (dynamic value for the CN PDB). In this application, a dynamic CN PDB is used to describe the dynamic value for the CN PDB, and a static CN PDB is used to describe the static value for the CN PDB. For the dynamic CN PDB, in the 5GS, the dynamic CN PDB may be configured in the RAN based on various inputs, such as different IP addresses or tunnel endpoint identifiers (tunnel endpoint identifiers, TEIDs) of the UPF network element terminating an N3 tunnel and based on different combinations of the UPF network element of a PDU session anchor (PDU session anchor, PSA) to the RAN (any potential intermediate UPF (intermediate UPF, I-UPF) network element needs to be considered). In the 5GS, the dynamic CN PDB may also be configured in the SMF network element based on different combinations of the PSA UPF network element to the RAN, and any potential I-UPF network element also needs to be considered.

When the SMF network element determines the TSCAI BAT in the downlink direction based on the DL BAT and the CN PDB that are included in the TSCAC, the CN PDB is the dynamic CN PDB, that is, the TSCAI BAT satisfies mapping: $TSCAI BAT = TSCAC DL BAT + Dynamic DL CN PDB .$

However, when the dynamic CN PDB is configured in the RAN, the SMF network element cannot obtain the dynamic CN PDB. In this case, the SMF network element may determine a static CN PDB based on a 5G QoS identifier (5G QoS identifier, 5QI) of a QoS flow corresponding to a TSC flow (the static CN PDB is related only to the 5QI, and the static CN PDB may be obtained when the 5QI is given). In this case, when the SMF network element determines the TSCAI BAT in the downlink direction based on the DL BAT and the static CN PDB that are included in the TSCAC, the TSCAI BAT satisfies a mapping manner: $TSCAI BAT = TSCAC DL BAT + Static DL CN PDB .$

When the SMF network element determines the TSCAI BAT in the downlink direction based on the static CN PDB, the RAN reserves a resource based on the TSCAI BAT. Because a value of the dynamic CN PDB is less than a value of the static CN PDB, the TSC flow arrives earlier than expected time of the RAN, that is, an end-to-end deterministic latency is incorrectly calculated. When interworking between the 3GPP network and the TSN network or the TSC service is implemented, service orchestration cannot be accurately performed.

To resolve the foregoing technical problem, this application provides a burst arrival time determining method and a related apparatus, to ensure accuracy of a deterministic latency in a time sensitive service and meet a transmission requirement in the industrial field.

A technical concept of this application is as follows: When a dynamic CN PDB is configured in a RAN, the RAN receives TSCAI from an SMF network element, and corrects TSCAI BAT based on the dynamic CN PDB, to ensure that an upper time limit of a possible latency between any N6 termination point at a UPF network element and the RAN is the dynamic CN PDB, thereby ensuring accuracy of an end-to-end deterministic latency.

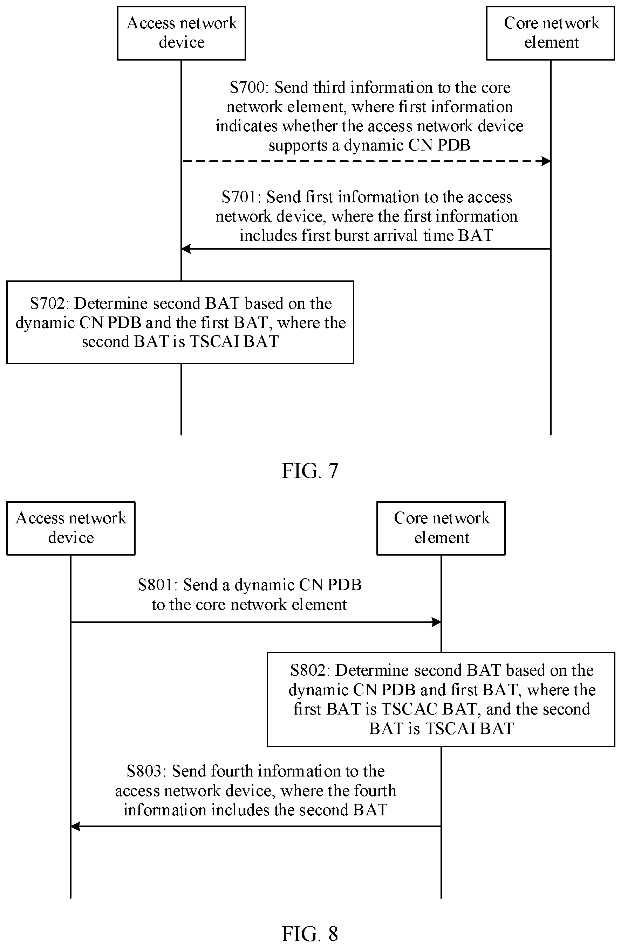

FIG. 7 is a schematic flowchart of a burst arrival time determining method according to an embodiment of this application. As shown in FIG. 7, the BAT determining method may include S701 and S702.

S701: A core network element sends first information to an access network device, where the first information includes first burst arrival time BAT. Correspondingly, the access network device receives the first information from the core network element.

In an example, the first information sent by the core network element to the access network device is TSCAI, and that the first information includes the first BAT means that the TSCAI includes the first BAT. If the core network element does not map BAT, the first BAT included in the TSCAI may be referred to as TSCAI BAT in form, but is still essentially TSCAC BAT (which may be understood as that a value of the first BAT is equal to a value of the TSCAC BAT or is corrected only by using a time offset measurement value reported by a UPF network element); or if the core network element maps BAT, the first BAT included in the TSCAI is TSCAI BAT.

In some implementations, before step S701, as shown in step S700, the access network device may further send third information to the core network element, where the third information indicates whether the access network device supports a dynamic CN PDB. Correspondingly, the core network element receives the third information from the access network device. The core network element determines, based on the third information, whether the access network device supports the dynamic CN PDB, and determines whether to map the BAT.

S702: The access network device determines second BAT based on the dynamic CN PDB and the first BAT, where the second BAT is TSCAI BAT. The access network device supports the dynamic CN PDB.

It may be understood that, that the access network device supports the dynamic CN PDB means that the dynamic CN PDB is configured in the access network device, and the access network device may directly obtain the dynamic CN PDB.

If the first BAT included in the first information received from the core network element in step S701 is TSCAC BAT that is not mapped, based on a mapping relationship between the TSCAC BAT and the TSCAI BAT, the access network device may determine the second BAT based on the dynamic CN PDB and the first BAT, and the second BAT satisfies the following mapping manner: $Second BAT = First BAT + Dynamic CN PDB .$

It can be learned from the mapping relationship between the TSCAC BAT and the TSCAI BAT that a CN PDB used when the first BAT is mapped as the second BAT is the dynamic CN PDB. Therefore, the second BAT serves as the TSCAI BAT, that is, time at which a TSC flow arrives at an ingress port of the access network device, to ensure accuracy of an end-to-end deterministic latency.

If the first BAT included in the first information is TSCAI BAT that is mapped by the core network element, based on a mapping relationship between the TSCAC BAT and the TSCAI BAT, the access network device may determine the second BAT based on the dynamic CN PDB, the first BAT, and a static CN PDB, and the second BAT satisfies the following mapping manner: $Second BAT = First BAT - Static CN PDB + Dynamic CN PDB .$

It can be learned from the mapping relationship between the TSCAC BAT and the TSCAI BAT that, if the core network element maps the TSCAC BAT to obtain the first BAT, because the dynamic CN PDB is configured in the access network device, the core network element cannot obtain the dynamic CN PDB, and the core network element can only use the static CN PDB to correct the TSCAC BAT. Therefore, in the relational expression, a difference obtained by subtracting the static CN PDB from the first BAT is actually the TSCAC BAT, and the access network device may determine accurate TSCAI BAT based on the dynamic CN PDB and the TSCAC BAT.

It may be understood that the BAT determining method provided in this embodiment may be applied to the system architecture shown in FIG. 3 or FIG. 6. For example, the access network device may be a RAN node in a 5GS in a 3GPP network, and the core network element may be an SMF network element in the 5GS. It should be noted that in future communication, the access network device may still be referred to as a RAN node, and a session management network element in a core network may still be referred to as an SMF network element, or may have another name. This is not limited in this application. An AN or a RAN that appears anywhere subsequently in this application may be replaced with an access network device, and an SMF network element that appears anywhere subsequently in this application may be replaced with a session management network element.

In this embodiment, based on the mapping relationship between the TSCAC BAT and the TSCAI BAT, the access network device may correct, based on the dynamic CN PDB, the first BAT sent by the core network element to the second BAT, thereby ensuring accuracy of an end-to-end deterministic latency.

It may be understood that the access network device corrects the first BAT based on the dynamic CN PDB, to obtain the accurate TSCAI BAT. Therefore, if the core network element can obtain the dynamic CN PDB, the core network element may directly map the TSCAC BAT, to determine the accurate TSCAI BAT.

FIG. 8 is a schematic flowchart of a burst arrival time determining method according to another embodiment of this application. Similarly, the BAT determining method provided in this embodiment may be applied to the system architecture shown in FIG. 3 or FIG. 6, and a dynamic CN PDB is configured in an access network device. As shown in FIG. 8, the BAT determining method may include S801 to S803.

S801: An access network device sends a dynamic CN PDB to a core network element. Correspondingly, the core network element receives the dynamic CN PDB from the access network device.

Because the dynamic CN PDB is configured in the access network device, the access network device may obtain the locally configured dynamic CN PDB. It can be learned based on a mapping relationship between TSCAC BAT and TSCAI BAT that accurate TSCAI BAT can be determined only after TSCAC BAT is mapped based on the dynamic CN PDB. Therefore, the access network device sends the dynamic CN PDB to the core network element.

S802: The core network element determines second BAT based on the dynamic CN PDB and first BAT, where the first BAT is TSCAC BAT, and the second BAT is TSCAI BAT.

A value of the first BAT is equal to a value of the TSCAC BAT, or a value of the first BAT is equal to a corrected value obtained by correcting the TSCAC BAT by using a time offset measurement value. Based on the mapping relationship between the TSCAC BAT and the TSCAI BAT, the core network element may determine the second BAT based on the dynamic CN PDB and the first BAT, where the second BAT is the accurate TSCAI BAT. The second BAT satisfies the following mapping manner: $Second BAT = First BAT + Dynamic CN PDB .$

S803: The core network element sends fourth information to the access network device, where the fourth information includes the second BAT.

In this step, the fourth information is equivalent to TSCAI, the TSCAI includes the TSCAI BAT, and the core network element sends the second BAT to the access network device through the fourth information.

In this embodiment, the access network device reports the dynamic CN PDB to the core network element. When obtaining the dynamic CN PDB, the core network element may directly use the dynamic CN PDB to map the TSCAC BAT, determine the accurate TSCAI BAT, and send the accurate TSCAI BAT to the access network device. It should be noted that a process in which the access network device or the core network element determines the second BAT based on the dynamic CN PDB and the first BAT is actually performed in a PDU session establishment or modification process. The following describes the BAT determining method provided in this application with reference to a PDU session establishment or modification procedure in a specific system architecture.

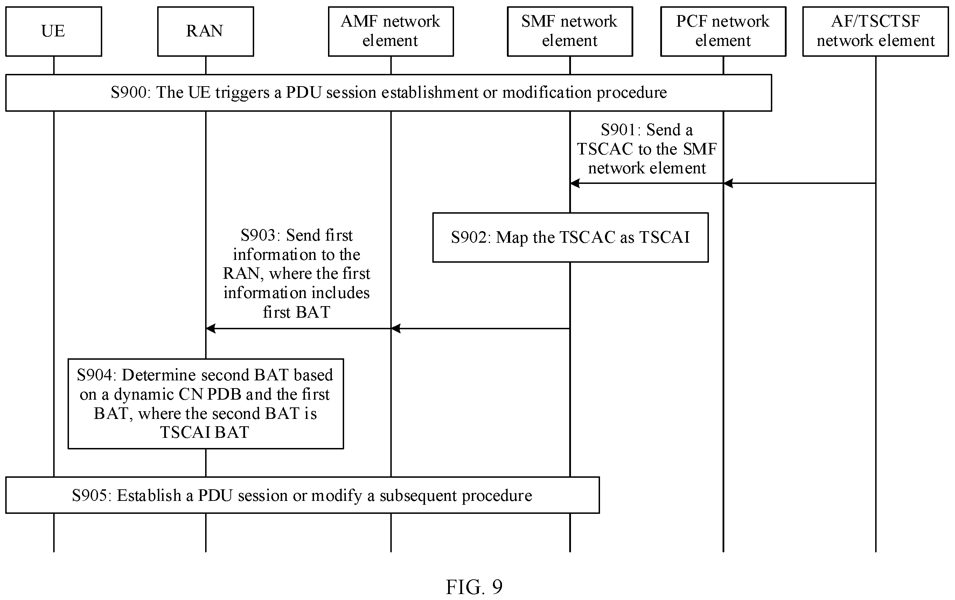

FIG. 9 is a schematic flowchart of a burst arrival time determining method according to an embodiment of this application. The BAT determining method provided in this embodiment may be applied to the system architecture shown in FIG. 3 or FIG. 6. For example, a RAN node is used as an access network device, an SMF network element is used as a core network element, and a dynamic CN PDB is configured in the RAN node. As shown in FIG. 9, the method specifically includes the following steps.

S900: UE triggers a PDU session establishment or modification procedure.

In this step, the UE triggers PDU session establishment or PDU session modification, and a process of establishing a PDU session or modifying the PDU session involves the UE, a RAN, an AMF network element, an SMF network element, and a PCF network element.

S901: An AF/TSCTSF network element sends a TSCAC to the SMF network element. Correspondingly, the SMF network element receives the TSCAC from the AF/TSCTSF network element.

When a 5GS interworks with a TSN system, the AF network element obtains scheduling time of a TSC flow from a CNC in the TSN system, to determine time at which the TSC flow arrives at an ingress of the 5GS, that is, time at which the TSC flow arrives at an NW-TT in the UPF network element in a downlink direction. After determining the TSCAC, the AF network element may provide the TSCAC for the SMF network element via the PCF network element. In an example, the AF network element may send a policy and charging control (policy and charging control, PCC) rule to the SMF network element via the PCF network element, where the PCC rule carries the TSCAC.

When the 5GS interworks with a TSC service of non-TSN, the AF network element may provide a traffic mode parameter for the NEF network element, for example, a TSC flow direction, a flow periodicity, burst arrival time, time to live, and a time domain of a reference ingress port. The NEF network element may forward the received traffic mode parameter to the TSCTSF network element. The TSCTSF network element may determine the TSCAC based on these traffic mode parameters, and provide the TSCAC for the SMF network element via the PCF network element. Similarly, the TSCTSF network element may send the PCC rule to the SMF network element via the PCF network element, and provide the TSCAC for the SMF network element by carrying the TSCAC in the PCC rule.

It may be understood that, regardless of a manner in which the TSCAC is sent to the SMF network element, the TSCAC includes the TSCAC BAT.

After receiving the PCC rule from the PCF network element, the SMF network element may establish a QoS flow according to the PCC rule, and send characteristic information corresponding to the QoS flow to the RAN and the UPF network element. For an architecture of a 5G QoS flow model, refer to FIG. 2. Details are not described herein again.

S902: The SMF network element maps the TSCAC as TSCAI.

In this step, that the SMF network element maps the TSCAC is actually mapping the TSCAC BAT included in the TSCAC as TSCAI BAT. Because a dynamic CN PDB is configured in a RAN node, a CN PDB used by the SMF network element to map the TSCAC BAT is a static CN PDB.

In an example, the SMF network element may determine a standardized static CN PDB based on a 5QI in a corresponding QoS flow. For example, based on content about the 5G QoS model in section 5.7.4 of the standard TS23.501, when the 5QI is equal to 83, the PDB is 10 ms (ms), and the static CN PDB is 1 ms. When the 5QI is equal to 80, the PDB is 10 ms, and the static CN PDB is 2 ms.

In some implementations, the SMF network element may not map the TSCAC BAT. It may be understood that the SMF network element can abandon mapping the TSCAC BAT only when determining that the RAN node supports the dynamic CN PDB. That the RAN node supports the dynamic CN PDB indicates that the dynamic CN PDB is configured in the RAN node.

In a possible implementation, it may be specified in a protocol that when the 5GS interworks with the TSN system or the TSC service of the non-TSN system, the RAN node in the system architecture supports the dynamic CN PDB. In this case, the SMF network element considers by default that the RAN node supports the dynamic CN PDB. When receiving the TSCAC, the SMF network element abandons mapping the TSCAC BAT.

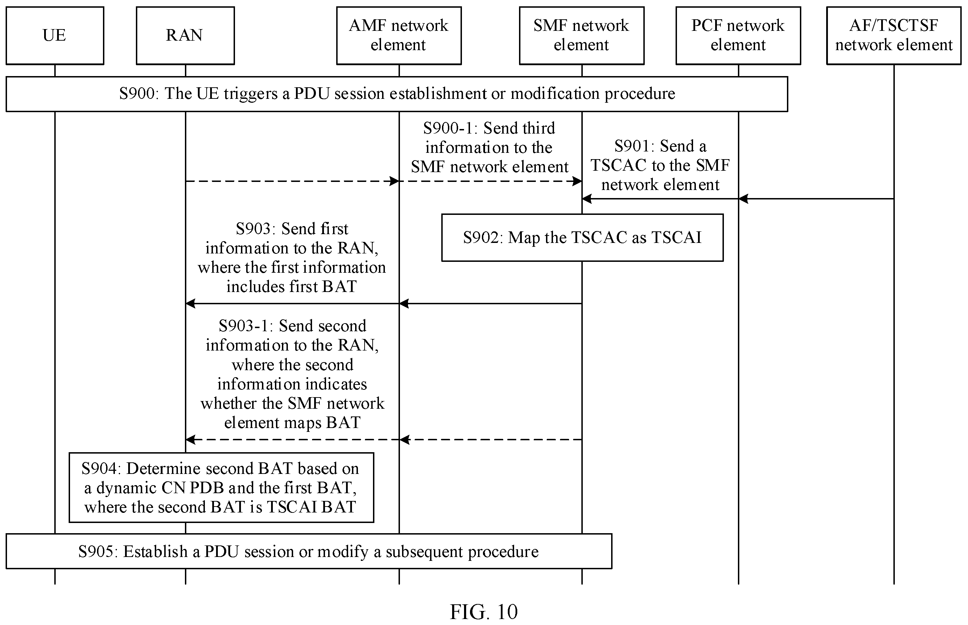

In another possible implementation, as shown in step S900-1 in FIG. 10, the RAN node may send third information to the SMF network element. The third information is equivalent to capability information, and the third information may indicate, to the SMF network element, that the RAN node supports the dynamic CN PDB. For example, the third information may directly indicate that the RAN node supports the dynamic CN PDB; or the third information may indicate a Boolean value. When the Boolean value is 0, it indicates that the RAN node does not support the dynamic CN PDB; or when the Boolean value is 1, it indicates that the RAN node supports the dynamic CN PDB. Correspondingly, the SMF network element may determine, based on the third information, that the RAN node supports the dynamic CN PDB, and therefore abandon mapping the TSCAC BAT.

It may be understood that, when the TSCAC BAT is mapped in this step, the SMF network element may correct the TSCAC BAT based on a time offset measurement value latest received from the UPF network element. Considering that a corrected value of the TSCAC BAT is not corrected by the CN PDB, the "TSCAC BAT" in this embodiment of this application may indicate the TSCAC BAT or a corrected value obtained by correcting the TSCAC BAT by using a time offset measurement value.

S903: The SMF network element sends first information to the RAN, where the first information includes the first BAT. Correspondingly, the RAN receives the first information from the SMF network element.

In this step, the first information is equivalent to the TSCAI sent by the SMF network element to the RAN. Therefore, if the SMF network element maps the TSCAC BAT as the TSCAI BAT in step S802, the first BAT included in the first information is the TSCAI BAT obtained by the SMF network element by mapping the TSCAC BAT based on the static CN PDB.

If the SMF network element abandons mapping the TSCAC BAT in step S902, although the first BAT included in the first information may be referred to as TSCAI BAT, the first BAT is essentially the TSCAC BAT in the TSCAC received by the SMF network element.

In some implementations, as shown in step S903-1 in FIG. 10, the SMF network element may further send second information to the RAN, and the second information indicates whether the SMF network element maps BAT. Correspondingly, the RAN receives the second information from the SMF network element, and may determine, based on the second information, whether the first BAT is TSCAI BAT or TSCAC BAT.

It should be noted that in some implementations, the RAN node reports the third information to the SMF network element only after the second information indicates that the SMF network element does not map the BAT. The SMF network element determines, based on the third information, whether the RAN supports the dynamic CN PDB, and re-determines whether to map the TSCAC BAT.

It may be understood that, in this step, the SMF network element first sends the first information to the AMF network element, and the AMF network element transparently transmits the first information to the RAN.

S904: The RAN determines second BAT based on the dynamic CN PDB and the first BAT, where the second BAT is TSCAI BAT.

In this step, the RAN may obtain the locally configured dynamic CN PDB, and determine the TSCAI BAT based on a mapping relationship between the TSCAC BAT and the TSCAI BAT.

If the first BAT is TSCAC BAT that is not mapped, the RAN node may determine the second BAT based on the dynamic CN PDB and the first BAT, and the second BAT satisfies the following mapping manner: $Second BAT = First BAT + Dynamic CN PDB .$

If the first BAT is TSCAI BAT that is mapped by the SMF network element, the RAN node may determine the second BAT based on the dynamic CN PDB, the static CN PDB, and the first BAT, and the second BAT satisfies the following mapping manner: $Second BAT = First BAT - Static CN PDB + Dynamic CN PDB .$

The static CN PDB may be a standardized static CN PDB determined by the SMF network element based on a 5QI in a corresponding QoS flow.

It may be understood that if the SMF network element does not indicate, to the RAN by the second information, whether to map BAT, the SMF network element and the RAN node may determine, by default, that the first BAT is TSCAC BAT or TSCAI BAT, to correct the first BAT to the second BAT. In an example, it is specified in a protocol that the RAN node supports the dynamic CN PDB. In this case, the SMF network element abandons mapping the TSCAC BAT by default, and the RAN node considers the first BAT as the TSCAC BAT by default and performs corresponding mapping.

In some implementations, if the SMF network element does not indicate, to the RAN by the second information, whether to map the BAT, the RAN node considers, by default, the first BAT as the TSCAI BAT that is mapped by the SMF network element.

S905: Establish the PDU session or modify a subsequent procedure.

After determining the second BAT, the RAN node can specify BAT at which the TSC flow arrives at an ingress of the RAN node in the 5GS in the downlink direction, and the 5GS may establish the PDU session or modify the subsequent procedure of the PDU session according to an existing procedure, to implement accurate service orchestration.

In this embodiment, the RAN node corrects, based on the locally configured dynamic CN PDB and the mapping relationship between the TSCAC BAT and the TSCAI BAT, the first BAT in the TSCAI sent by the SMF network element, establishes or modifies the PDU session, and accurately orchestrates time sensitive services.

In the foregoing embodiment, the RAN node corrects the first BAT based on the dynamic CN PDB, to obtain accurate TSCAI BAT. Therefore, when the SMF network element can obtain the dynamic CN PDB, the SMF network element may map the TSCAC BAT, to determine the accurate TSCAI BAT.

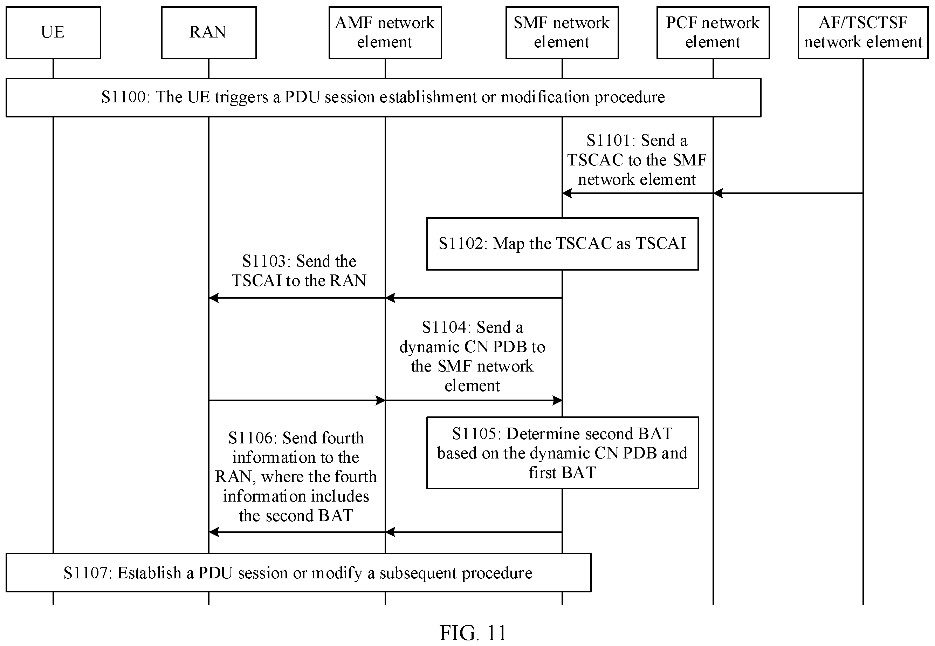

FIG. 11 is a schematic flowchart of a burst arrival time determining method according to an embodiment of this application. The BAT determining method provided in this embodiment may be applied to the system architecture shown in FIG. 3 or FIG. 6, and a dynamic CN PDB is configured in a RAN node. As shown in FIG. 11, the method specifically includes the following steps.

S1100: UE triggers a PDU session establishment or modification procedure.

S1101: An AF/TSCTSF network element sends a TSCAC to an SMF network element. Correspondingly, the SMF network element receives the TSCAC from the AF/TSCTSF network element.

Steps S1100 and S1101 are basically the same as steps S900 and S901. Details are not described herein again.

S1102: The SMF network element maps the TSCAC as TSCAI.

In an example, because a dynamic CN PDB is configured in a RAN node, the SMF network element maps TSCAC BAT based on a static CN PDB, to obtain TSCAI BAT.

S1103: The SMF network element sends the TSCAI to a RAN. Correspondingly, the RAN receives the TSCAI from the SMF network element.

Because the SMF network element maps TSCAC BAT included in the TSCAC, the TSCAI sent by the SMF network element to the RAN includes the TSCAI BAT.

S1104: The RAN sends the dynamic CN PDB to the SMF network element. Correspondingly, the SMF network element receives the dynamic CN PDB from the RAN.

When the dynamic CN PDB is configured in the RAN node, the SMF network element cannot obtain the dynamic CN PDB. Therefore, in this step, after obtaining the locally configured dynamic CN PDB, the RAN may send the dynamic CN PDB to the SMF network element. In an example, after receiving the TSCAI from the SMF network element, the RAN sends the dynamic CN PDB to the SMF network element by default.

In some implementations, before step S1103, that is, before the SMF network element sends the TSCAI to the RAN, the RAN may actively send the dynamic CN PDB to the SMF network element. It may be understood that if the RAN actively sends the dynamic CN PDB to the SMF network element before step S1103, step S1103 is not performed, and the procedure in this embodiment directly jumps to step S1105.

S1105: The SMF network element determines second BAT based on the dynamic CN PDB and first BAT.

In this step, a value of the first BAT is equal to a value of the TSCAC BAT, or a value of the first BAT is equal to a corrected value obtained by correcting the TSCAC BAT by using a time offset measurement value. Based on a mapping relationship between the TSCAC BAT and the TSCAI BAT, the SMF network element may map the first BAT based on the dynamic CN PDB sent by the RAN, to determine the second BAT. The second BAT satisfies the following mapping manner: $Second BAT = First BAT + Dynamic CN PDB .$

Compared with step S1102, this step is equivalent to that the SMF network element remaps the TSCAC BAT based on the dynamic CN PDB, and corrects the second BAT to accurate TSCAI BAT.

S1106: The SMF network element sends fourth information to the RAN, where the fourth information includes the second BAT. Correspondingly, the RAN receives the fourth information from the SMF network element.

The fourth information is equivalent to corrected TSCAI, and the RAN node may reserve a resource in advance based on the second BAT.

S1107: Establish a PDU session or modify a subsequent procedure.

Consistent with step S905 shown in FIG. 9, after the RAN node determines the second BAT, the 5GS establishes the PDU session or modifies the subsequent procedure of the PDU session according to an existing procedure.

In this embodiment, the RAN node reports the dynamic CN PDB to the SMF network element. When obtaining the dynamic CN PDB, the SMF network element may directly map the TSCAC BAT based on the dynamic CN PDB and the mapping relationship between the TSCAC BAT and the TSCAI BAT, determine the accurate TSCAI BAT, and send the TSCAI BAT to the RAN node.

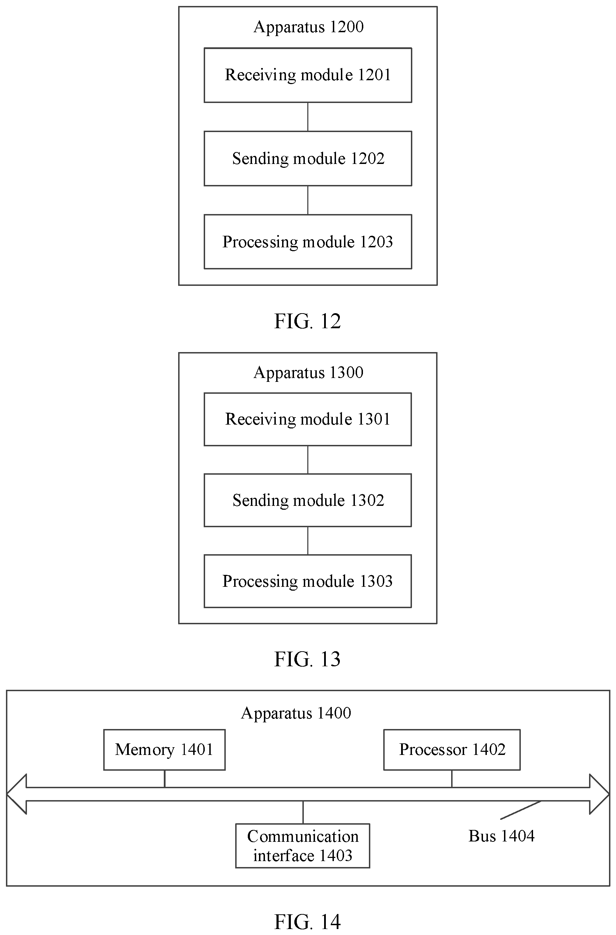

FIG. 12 is a diagram of a structure of a burst arrival time determining apparatus according to an embodiment of this application. As shown in FIG. 12, an apparatus 1200 in this embodiment may include: a receiving module 1201, a sending module 1202, and a processing module 1203. The apparatus 1200 may be configured to implement operations implemented by the access network device in the method shown in any one of the flowcharts in FIG. 7 to FIG. 11.

For example, the receiving module 1201 may be configured to receive first information from a core network element, where the first information includes first BAT.

In some implementations, the receiving module 1201 may be further configured to receive second information from the core network element, where the second information indicates that the core network element does not map BAT.

In some implementations, the receiving module 1201 may be further configured to receive second information from the core network element, where the second information indicates that the core network element has mapped BAT.

The processing module 1203 may be configured to determine second BAT based on a dynamic CN PDB and the first BAT, where the second BAT is TSCAI BAT, and the access network device supports the dynamic CN PDB.

In some implementations, when determining the second BAT based on the dynamic CN PDB and the first BAT, the processing module 1203 may be configured to determine the second BAT based on the dynamic CN PDB, the first BAT, and a static CN PDB.

The sending module 1202 may be configured to send the dynamic CN PDB to the core network element.

In some implementations, the sending module 1202 may be further configured to send third information to the core network element, where the third information indicates that the access network device supports the dynamic CN PDB.

FIG. 13 is a diagram of a structure of a burst arrival time determining apparatus according to another embodiment of this application. As shown in FIG. 13, an apparatus 130 in this embodiment may include: a receiving module 1301, a sending module 1302, and a processing module 1303. The apparatus 1300 may be configured to implement operations implemented by the core network element in the method shown in any one of the flowcharts in FIG. 7 to FIG. 11.

For example, the receiving module 1301 may be configured to receive third information from an access network device, where the third information indicates whether the access network device supports a dynamic CN PDB.

In some implementations, the receiving module 1301 may be further configured to receive a dynamic CN PDB from an access network device.

The sending module 1302 may be configured to send second information to the access network device, where the second information indicates that the core network element does not map BAT.

In some implementations, the sending module 1302 may be further configured to send second information to the access network device, where the second information indicates that the core network element has mapped BAT.

The processing module 1303 may be configured to determine second BAT based on the dynamic CN PDB and first BAT, where the first BAT is TSCAC BAT, and the second BAT is TSCAI BAT.

In some implementations, the sending module 1302 may be further configured to send fourth information to the access network device, where the fourth information includes the second BAT.

It should be understood that the apparatus 1200 and the apparatus 1300 are implemented in a form of a functional module. The term "module" may refer to a software module, or may refer to an application-specific integrated circuit, an electronic circuit, a processor configured to execute one or more software or firmware programs (for example, a shared processor, a dedicated processor, or a group processor) and a memory, a merge logic circuit, and/or another suitable component that supports the described function.

The apparatus 1200 and the apparatus 1300 have functions of implementing corresponding procedures and/or steps in any one of the foregoing method embodiments. The foregoing functions may be implemented by software, or may be implemented by hardware by executing corresponding software. The hardware or the software includes one or more modules corresponding to the function.

FIG. 14 is a diagram of a structure of a burst arrival time determining apparatus according to still another embodiment of this application. An apparatus 1400 shown in FIG. 14 may be configured to perform the method performed by the burst arrival time determining apparatus in any one of the foregoing methods.

As shown in FIG. 14, the apparatus 1400 in this embodiment includes: a memory 1401, a processor 1402, a communication interface 1403, and a bus 1404. The memory 1401, the processor 1402, and the communication interface 1403 are communicatively connected to each other through the bus 1404.

The memory 1401 may be a read-only memory (read-only memory, ROM), a static storage device, a dynamic storage device, or a random access memory (random access memory, RAM). The memory 1401 may store a program. When the program stored in the memory 1401 is executed by the processor 1402, the processor 1402 is configured to perform any one of the foregoing methods.

The processor 1402 may be a general-purpose central processing unit (central processing unit, CPU), a microprocessor, an application-specific integrated circuit, or one or more integrated circuits, and is configured to execute a related program.

The processor 1402 may alternatively be an integrated circuit chip and has a signal processing capability. In an implementation process, the related steps in embodiments of this application may be completed by using a hardware integrated logic circuit or an instruction in a form of software in the processor 1402.

The processor 1402 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1401. The processor 1402 reads information in the memory 1401, and completes, in combination with hardware of the processor 1402, functions that need to be performed by units included in the apparatus in this application.

The communication interface 1403 may use, but not limited to, a transceiver apparatus of a transceiver type, to implement communication between the apparatus 1400 and another device or apparatus.

The bus 1404 may include a path for information transmission between various components (for example, the memory 1401, the processor 1402, and the communication interface 1403) of the apparatus 1400.

An embodiment of this application further provides a computer-readable storage medium. The computer-readable storage medium stores computer instructions. When executing the computer instructions, a processor implements the steps in the methods in the foregoing embodiments.

An embodiment of this application further provides a computer program product, including computer instructions. When the computer instructions are executed by a processor, the steps in the methods in the foregoing embodiments are implemented.

It should be noted that the modules or components shown in the foregoing embodiments may be one or more integrated circuits, for example, one or more application-specific integrated circuits, one or more microprocessors, or one or more field programmable gate arrays, configured to implement the foregoing methods. For another example, when one of the foregoing modules is implemented in a form in which a processing element invokes program code, the processing element may be a general-purpose processor, for example, a central processing unit, or another processor, for example, a controller, that can invoke program code. For another example, the modules may be integrated and implemented in a form of a system-on-a-chip (system-on-a-chip, SOC).

All or a part of the foregoing embodiments may be implemented by software, hardware, firmware, software modules, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive (SSD)), or the like.

A person skilled in the art can easily figure out another implementation solution of this application after considering the specification and practicing the content that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as examples, and the actual scope and spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A burst arrival time determining method, applied to an access network device, wherein the method comprises:
receiving first information from a core network element, wherein the first information comprises first burst arrival time BAT; and
determining second BAT based on a dynamic core network packet delay budget CN PDB and the first BAT, wherein the second BAT is BAT of time sensitive communication assistance information TSCAI, and the access network device supports the dynamic CN PDB.

2. The method according to claim 1, wherein the first BAT is BAT of a time sensitive communication assistance container TSCAC.

3. The method according to claim 2, wherein the method further comprises:
receiving second information from the core network element, wherein the second information indicates that the core network element does not map BAT.

4. The method according to any one of claims 1 to 3, wherein before receiving the first information from the core network element, the method further comprises:
sending third information to the core network element, wherein the third information indicates that the access network device supports the dynamic CN PDB.

5. The method according to claim 1, wherein the first BAT is TSCAI BAT; and determining the second BAT based on the dynamic core network packet delay budget CN PDB and the first BAT comprises:
determining the second BAT based on the dynamic CN PDB, the first BAT, and a static CN PDB.

6. The method according to claim 5, wherein the method further comprises:
receiving second information from the core network element, wherein the second information indicates that the core network element has mapped BAT.

7. A burst arrival time determining method, applied to a core network element, wherein the method comprises:
receiving third information from an access network device, wherein the third information indicates whether the access network device supports a dynamic CN PDB; and
sending first information to the access network device based on the third information, wherein the first information indicates first BAT.

8. The method according to claim 7, wherein the third information indicates that the access network device supports the dynamic CN PDB, and the first BAT is TSCAC BAT.

9. The method according to claim 8, wherein the method further comprises:
sending second information to the access network device, wherein the second information indicates that the core network element does not map BAT.

10. The method according to claim 7, wherein the first BAT is TSCAI BAT.

11. The method according to claim 10, wherein the method further comprises:
sending second information to the access network device, wherein the second information indicates that the core network element has mapped BAT.

12. A burst arrival time determining method, applied to a core network element, wherein the method comprises:
receiving a dynamic CN PDB from an access network device;
determining second BAT based on the dynamic CN PDB and first BAT, wherein the first BAT is TSCAC BAT, and the second BAT is TSCAI BAT; and
sending fourth information to the access network device, wherein the fourth information comprises the second BAT.

13. A burst arrival time determining apparatus, wherein the burst arrival time determining apparatus comprises a functional module configured to implement the burst arrival time determining method according to any one of claims 1 to 6, or comprises a functional module configured to implement the burst arrival time determining method according to any one of claims 7 to 12.

14. A burst arrival time determining apparatus, comprising a processor and a memory;
the memory stores computer-executable instructions; and
the processor executes the computer-executable instructions stored in the memory, so that the burst arrival time determining apparatus performs the burst arrival time determining method according to any one of claims 1 to 6 or the burst arrival time determining method according to any one of claims 7 to 12.

15. A computer-readable storage medium, wherein the computer-readable storage medium stores computer-executable instructions, and when the computer-executable instructions are executed by a processor, the computer-executable instructions are used to implement the burst arrival time determining method according to any one of claims 1 to 6 or any one of claims 7 to 12.

16. A computer program product, comprising a computer program, wherein when the computer program is executed by a processor, the burst arrival time determining method according to any one of claims 1 to 6 or any one of claims 7 to 12 is implemented.
